# FASCICULE DE BREVET EUROPEEN

(11) **EP 1 788 254 B1**
(45) Date de publication et mention de la délivrance du brevet: **04.06.2008**
(21) Numéro de dépôt: 06124033.9
(22) Date de dépôt: 14.11.2006
(51) Int. Cl.: F04D 29/04

(54) **Pompe à aubes à roulement extérieur**
Schaufelradpumpe mit Außenradlager
Impeller pump with external bearing

(30) Priorité: 22.11.2005 FR 0553548
(43) Date de publication de la demande: 23.05.2007
(73) Titulaire: PIERBURG SARL, 57974 Yutz Cédex (FR)
(72) Inventeur: Reininger, Pierre, 57970 Basse Halm (FR)
(74) Mandataire: Vièl, Frédérique

(56) Documents cités:
- EP-A- 1 338 797
- EP-A- 1 471 262
- US-A1- 2002 176 773
- US-A1- 2004 136 631

## Description

L'invention concerne une pompe à aubes à roulement extérieur comprenant un corps de pompe dans lequel se trouve une roue à aubes montée sur un arbre de transmission, ainsi que des moyens d'entraînement pour entraîner en rotation l'arbre de transmission, ces moyens d'entraînement comprenant une surface de contact entraînée en rotation par des moyens de transmission, la surface de contact étant d'une part solidaire de l'arbre d'entraînement et d'autre part de la cage extérieure d'un roulement, la cage intérieure dudit roulement étant montée sur un palier du corps de pompe en étant solidaire de ce dernier.

De telles pompes à aubes servent notamment dans l'industrie automobile pour faire circuler l'eau du circuit de refroidissement des véhicules. Elles sont mises en mouvement par une courroie qui entraîne une poulie. Initialement, la poulie était directement emmanchée sur l'arbre de transmission et le roulement à billes se trouvait à l'intérieur du corps de pompe. Malgré la présence d'une garniture d'étanchéité entre l'intérieur de la pompe et le roulement à billes, le roulement est soumis en permanence à une humidité ambiante, voire à des fuites d'eau, ce qui provoque son usure précoce avec risque de panne.

Il a donc été suggéré, par exemple dans le brevet IT 01 248 813 ou dans la demande EP 1 188 931 A2, de placer le roulement non pas à l'intérieur, mais à l'extérieur du corps de pompe. Pour cela, un palier extérieur est formé sur le corps de pompe. Un roulement à billes est emmanché sur ce palier extérieur de sorte que la cage intérieure du roulement en soit solidaire. La poulie, qui a une forme annulaire, est emmanchée d'une part sur l'arbre de transmission, à l'intérieur du palier du corps de pompe, et d'autre part sur la cage extérieure du roulement. Elle est donc solidaire à la fois de l'arbre d'entraînement et de la cage extérieure du roulement. Un joint dynamique est interposé entre l'arbre d'entraînement et le corps de pompe pour éviter l'échappement du liquide de refroidissement vers l'extérieur et donc dans la poulie.

On trouve de telles pompes également dans les documents EP 1 338 797 A2 et EP 1 471 262 A2 ou dans les documents US 2002/176773 A1 et US 2004/136631 A1.

Dans cette solution, le roulement est donc situé à l'extérieur du corps de pompe de sorte qu'il n'est plus soumis à l'humidité due aux fuites inévitables. Pour retenir ces petites fuites inévitables malgré le joint dynamique, un espace est réservé autour de l'arbre de transmission à l'intérieur du palier du corps de pompe, du côté extérieur du joint dynamique. Cependant, en raison de l'empilement des différentes pièces autour de l'arbre de transmission (retour intérieur de la poulie - palier du corps de pompe - roulement - retour extérieur de la poulie servant de piste pour la courroie), le volume du réservoir est relativement faible, voire même dans certains cas inexistant. Autrement dit, dès que les fuites dites « cosmétiques » atteignent un certain volume, elles sortent de la pompe, même lorsqu'elles sont non significatives pour le fonctionnement de la pompe. Il n'est donc pas possible de distinguer une fuite « cosmétique » sans conséquence d'une fuite plus importante nécessitant une intervention, notamment le changement de la pompe.

De plus, le diamètre extérieur du roulement est également limité, de sorte qu'il est nécessaire de surdimensionner le roulement pour qu'il soit en mesure de subir les contraintes prévues.

L'objectif de l'invention est donc d'améliorer la pompe de l'état de la technique pour permettre d'une part d'augmenter le volume du réservoir destiné aux fuites cosmétiques et d'autre part d'utiliser des roulements de plus grands diamètres, ce qui permettrait d'augmenter la fiabilité du roulement.

Cet objectif est atteint conformément à l'invention du fait que la surface de contact est constituée par la surface extérieure de la cage extérieure du roulement. Grâce à cette solution, il est possible de renoncer à la poulie, la surface extérieure de la cage extérieure du roulement servant de piste pour la courroie. Le diamètre du roulement peut donc être augmenté en conséquence.

Dans la pratique, l'extrémité de l'arbre de transmission opposée à la roue à aubes peut se prolonger par un plateau radial fixé directement sur la cage extérieure du roulement par une liaison mécanique.

Il est également possible de prévoir un plateau radial qui soit emmanché sur l'arbre, le plateau radial étant fixé directement sur la cage extérieure du roulement par une liaison mécanique. Dans cette solution, le plateau radial et l'arbre de transmission sont deux pièces séparées.

La liaison mécanique pour fixer le plateau radial sur la cage extérieure du roulement peut être réalisée par une soudure, un filetage ou un sertissage ou par toute autre méthode adéquate.

Il est préférable de dimensionner le palier du corps de pompe pour ménager autour de l'arbre d'entraînement un réservoir de fuite. Le diamètre du palier extérieur du corps de pompe peut être augmenté grâce à la suppression du retour extérieur de la poulie, voire même du retour intérieur du plateau lorsqu'il est d'un seul tenant avec l'arbre d'entraînement. Le volume du réservoir situé entre l'arbre de transmission et le palier du corps de pompe peut donc également être accru.

Dans un mode de réalisation privilégié de l'invention, le réservoir de fuite est fermé du côté de l'intérieur de la pompe par un joint dynamique et/ou du côté de l'extérieur de la pompe par un bouchon, ce dernier étant réalisé de préférence d'un seul tenant avec le palier du corps de pompe.

Il est préférable que l'arbre de transmission soit creux. De même, il est avantageux d'aménager des trous dans le palier de la pompe et/ou dans le plateau radial afin d'évacuer les grosses fuites.

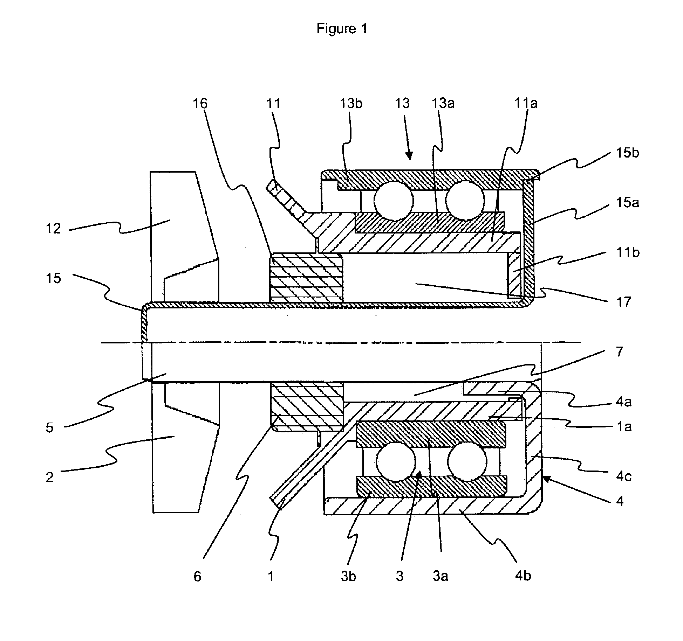

Un exemple de réalisation de l'invention est présenté ci-dessous à l'aide de l'unique figure qui présente dans la partie inférieure une pompe à aubes à roulement extérieur selon l'état de la technique, et dans sa partie supérieure une pompe selon l'invention.

La pompe de l'état de la technique est constituée d'un corps de boîtier (1) dans lequel se trouve une roue à aubes (2) entraînée par un arbre de transmission (5). L'arbre de transmission (5) est solidaire d'une poulie (4) emmanchée sur la cage extérieure (3b) d'un roulement à billes (3). La cage intérieure (3a) du roulement (3) est solidaire d'un palier extérieur (1a) du corps de pompe. Un joint dynamique (6) est placé sur l'arbre d'entraînement (5) entre la roue à aubes (2) et l'intérieur du corps de boîtier (1). Ce joint dynamique (6) empêche l'eau de refroidissement brassée par la roue à aubes de sortir de la pompe.

La poulie est constituée d'un premier retour intérieur (4a) emmanché sur l'arbre d'entraînement (5) et d'un second retour extérieur (4b) dont la surface extérieure sert de piste pour la courroie d'entraînement non représentée. Les deux retours (4a, 4b) sont reliés ensemble par un fond annulaire radial (4c).

Un petit réservoir (7) pour les fuites dites « cosmétiques » est placé autour de l'arbre d'entraînement (5), entre celui-ci et le palier (1a) du corps de pompe (1).

Le palier extérieur (1a) du corps de pompe (1) doit donc avoir un diamètre intérieur supérieur au diamètre extérieur du premier retour (4a) de la poulie. Par conséquent, le roulement (3) doit être dimensionné pour tenir entre le palier (1a) et le deuxième retour (4b) de la poulie.

Les contraintes imposées pour le dimensionnement du roulement (3) impliquent que le réservoir (7) soit nécessairement limité.

La pompe de l'invention représentée dans la partie supérieure de la figure contient sensiblement les mêmes constituants principaux. On y retrouve le corps de boîtier (11) présentant un palier extérieur (11 a) pour le roulement (13). La roue à aubes (12) est placée sur l'arbre d'entraînement (15). La cage intérieure (13a) du roulement (13) est fixée sur le palier extérieur (1a).

Contrairement à la pompe de l'état de la technique, la piste pour la courroie n'est pas constituée par une poulie (4, 4b), mais directement par la cage extérieure (13b) du roulement (13). Un plateau radial (15a) prolonge l'arbre d'entraînement (15) à son extrémité opposée à la roue à aubes (12). La cage extérieure (13b) du roulement (13) est fixée à ce plateau (15a) par tout moyen approprié (15b), par exemple par une soudure, un filetage ou un sertissage.

En renonçant à l'emploi d'une poulie (4), on renonce à deux couches de matériaux (4a, 4b). Tout en gardant un même diamètre de piste de courroie, le diamètre extérieur du roulement (13b) est augmenté. Le diamètre intérieur peut également être augmenté, ce qui à son tour permet d'augmenter le diamètre du palier (11a) du corps de pompe (11). Il en résulte par conséquent une augmentation du volume du réservoir (17).

Le réservoir (17) est limité radialement par l'arbre (15) d'une part et l'intérieur du palier (11 a) d'autre part, et axialement par un joint dynamique (16) du côté de l'intérieur de la pompe placé entre la roue à aubes (12) et le corps de pompe (11) et par un bouchon (11b). Ce bouchon (11 b) forme avec le reste du palier (11a) de préférence une pièce d'un seul tenant.

Dans l'exemple présenté dans la partie supérieure de la figure, l'arbre d'entraînement (15) est creux et forme avec le plateau (15a) une pièce d'un seul tenant. Il serait cependant également possible que l'arbre soit plein et/ou que le plateau (15a) soit une pièce séparée emmanchée sur l'arbre (15).

Pour évacuer les grosses fuites, il est possible d'aménager des trous d'évacuation dans le plateau (15a) ou dans l'alésage du corps de pompe (1).

Grâce à l'invention, le diamètre extérieur du roulement (13) peut être choisi plus grand, de sorte que le roulement soit mieux dimensionné. Il résiste mieux aux contraintes auxquelles il est soumis ce qui permet d'augmenter substantiellement la fiabilité du roulement. Cette mesure permet en outre l'aménagement d'un réservoir de fuite plus important. Par ailleurs, en renonçant à la poulie on simplifie l'ensemble de la pompe.

### Liste des références :

- 1: Corps de pompe
- 1a: Palier extérieur du corps de pompe
- 2: Roue à aubes
- 3: Roulement
- 3a: Cage intérieure du roulement
- 3b: Cage extérieure du roulement
- 4: Poulie
- 4a: Premier retour (intérieur) de la poulie
- 4b: Deuxième retour (extérieur) de la poulie
- 4c: Fond annulaire radial de la poulie
- 5: Arbre d'entraînement
- 6: Joint dynamique
- 7: Réservoir de fuite

- 11: Corps de pompe
- 11 a: Palier extérieur du corps de pompe
- 11b: Bouchon de palier
- 12: Roue à aubes
- 13: Roulement
- 13a: Cage intérieure du roulement
- 13b: Cage extérieure du roulement
- 15: Arbre d'entraînement
- 15a: Plateau radial
- 15b: Liaison mécanique
- 16: Joint dynamique
- 17: Réservoir de fuite

## Revendications

1. Pompe à aubes à roulement extérieur, comprenant
- un corps de pompe (11) dans lequel se trouve
- une roue à aubes (12) montée sur
- un arbre de transmission (15),
- ainsi que des moyens d'entraînement pour entraîner en rotation l'arbre de transmission (15), ces moyens d'entraînement comprenant une surface de contact entraînée en rotation par des moyens de transmission, la surface de contact étant d'une part solidaire de l'arbre d'entraînement (15) et d'autre part de la cage extérieure (13b) d'un roulement (13), la cage intérieure (13a) dudit roulement étant montée sur un palier (11a) du corps de pompe (11) en étant solidaire de ce dernier,
**caractérisée en ce que** la surface de contact est constituée par la surface extérieure de la cage extérieure (13b) du roulement (13).

2. Pompe à aubes selon la revendication précédente, **caractérisée en ce que** l'extrémité de l'arbre de transmission (15) opposée à la roue à aubes (12) se prolonge par un plateau radial (15a) fixé directement sur la cage extérieure du roulement (13b) par une liaison mécanique (15b).

3. Pompe à aubes selon la revendication 1, **caractérisée en ce qu**'un plateau radial est emmanché sur l'arbre (15), le plateau radial étant fixé directement sur la cage extérieure (13b) du roulement (13) par une liaison mécanique (15b).

4. Pompe à aubes selon la revendication 2 ou 3, **caractérisée en ce que** la liaison mécanique (15b) pour fixer le plateau radial (15a) sur la cage extérieure (13b) du roulement (13) est constituée par une soudure, un filetage ou un sertissage.

5. Pompe à aubes selon l'une des revendications précédentes, **caractérisée en ce que** le palier (11a) du corps de pompe (11) est dimensionné pour ménager autour de l'arbre d'entraînement (15) un réservoir de fuite (17).

6. Pompe à aubes selon la revendication précédente, **caractérisée en ce que** le réservoir de fuite (17) est fermé du côté de l'intérieur de la pompe par un joint dynamique (16) et/ou du côté de l'extérieur de la pompe par un bouchon (11 b), ce dernier étant réalisé de préférence d'un seul tenant avec le palier (11 a) du corps de pompe (11).

7. Pompe à aubes selon l'une des revendications précédentes, **caractérisée en ce que** l'arbre de transmission (15) est creux.

8. Pompe à aubes selon l'une des revendications précédentes, **caractérisée en ce que** des trous sont aménagés dans le palier de la pompe (11a) et/ou dans le plateau radial (15a).

## Claims

1. Impeller pump with external bearing, comprising
- a pump body (11) in which there is
- an impeller wheel (12) mounted on
- a transmission shaft (15),
- as well as drive means for driving the transmission shaft (15) in rotation, these drive means comprising a contact surface driven in rotation by transmission means, the contact surface being secured firstly to the drive shaft (15) and secondly to the external cage (13b) of a bearing (13), the internal cage (13a) of the said bearing being mounted on a bearing housing (11 a) of the pump body (11) while being secured to the latter,
**characterised in that** the contact surface consists of the external surface of the external cage (13b) of the bearing (13).

2. Impeller pump according to the preceding claim, **characterised in that** the end of the transmission shaft (15) opposite to the impeller wheel (12) is extended by a radial plate (15) fixed directly to the external cage of the bearing (13b) by a mechanical connection (15b).

3. Impeller pump according to claim 1, **characterised in that** a radial plate is fitted on the shaft (15), the radial plate being fixed directly to the external cage (13b) of the bearing (13) by a mechanical connection (15b).

4. Impeller pump according to claim 2 or 3, **characterised in that** the mechanical connection (15b) for fixing the radial plate (15a) to the external cage (13b) of the bearing (13) is formed by a weld, a thread or a crimping.

5. Impeller pump according to one of the preceding claims, **characterised in that** the bearing housing (11a) of the pump body (11) is sized so as to form a leakage reservoir (17) around the drive shaft (15).

6. Impeller pump according to the preceding claim, **characterised in that** the leakage reservoir (17) is closed on the inside of the pump by a dynamic seal (16) and/or on the outside of the pump by a plug (11 b), the latter preferably being produced in a single piece with the bearing housing (11 a) of the pump body (11).

7. Impeller pump according to one of the preceding claims, **characterised in that** the transmission shaft (15) is hollow.

8. Impeller pump according to one of the preceding claims, **characterised in that** holes are formed in the bearing housing (11a) of the pump and/or in the radial plate (15a).

## Patentansprüche

1. Schaufelradpumpe mit Außenradlager, welche aufweist:
- einen Pumpenkörper (11), in welchem sich befinden
- ein Schaufelrad (12), das angebracht ist auf
- einer Übertragungswelle (15),
- sowie Antriebsmittel zum Antreiben der Übertragungswelle (15) in Rotation, wobei diese Mittel eine Kontaktfläche aufweisen, die von Übertragungsmitteln in Rotation angetrieben wird, wobei die Kontaktfläche einerseits mit der Antriebswelle (15) und andererseits mit einem Außenkäfig (13b) eines Lagers (13) fest zusammengebaut ist, wobei der Innenkäfig (13a) des Lagers auf einem Lager (11a) des Pumpenkörpers (11) angebracht und mit Letztgenanntem fest zusammengebaut ist,
**dadurch gekennzeichnet, dass** die Kontaktfläche aus der Außenfläche des Außenkäfigs (13b) des Lagers (13) gebildet ist.

2. Schaufelradpumpe gemäß dem vorausgegangenen Anspruch, **dadurch gekennzeichnet, dass** das dem Schaufelrad (12) gegenüberliegende Ende der Übertragungswelle (15) durch eine radiale Platte verlängert wird, die direkt an dem Außenkäfig (13b) des Lagers mittels einer mechanischen Verbindung (15b) befestigt ist.

3. Schaufelradpumpe gemäß Anspruch 1, **dadurch gekennzeichnet, dass** eine radiale Platte auf der Welle (15) aufgebracht ist, wobei die radiale Platte direkt an dem Außenkäfig (13b) des Lagers (13) mittels einer mechanischen Verbindung (15b) befestigt ist.

4. Schaufelradpumpe gemäß Anspruch 2 oder 3, **dadurch gekennzeichnet, dass** die mechanische Verbindung (15b) zum Befestigen der radialen Platte (15a) an dem Außenkäfig (13b) des Lagers (13) aus einer Schweißverbindung, einer Schraubverbindung oder einer Bördelverbindung gebildet ist.

5. Schaufelradpumpe gemäß einem der vorausgegangenen Ansprüche, **dadurch gekennzeichnet, dass** die Abmessungen des Lagers (11a) des Pumpenkörpers (11) derart bemessen sind, dass um die Antriebswelle (15) ein Leckbehälter (17) angeordnet werden kann.

6. Schaufelradpumpe gemäß dem vorausgegangenen Anspruch, **dadurch gekennzeichnet, dass** der Leckbehälter (17) an der Innenseite der Pumpe mittels einer Bewegungsdichtung (16) und/oder an der Außenseite der Pumpe mittels eines Stopfens (11b) verschlossen ist, wobei der Letztgenannte vorzugsweise durchgehend mit dem Lager (11 a) des Pumpenkörpers (11) hergestellt ist.

7. Schaufelradpumpe gemäß einem der vorausgegangenen Ansprüche, **dadurch gekennzeichnet, dass** die Übertragungswelle (15) hohl ist.

8. Schaufelradpumpe gemäß einem der vorausgegangenen Ansprüche, **dadurch gekennzeichnet, dass** in dem Lager (11a) der Pumpe und/oder in der radialen Platte (15a) Löcher angeordnet sind.
